# EUROPÄISCHE PATENTSCHRIFT

(11) **EP 1 156 905 B1**
(45) Veröffentlichungstag und Bekanntmachung des Hinweises auf die Patenterteilung: **14.05.2003**
(21) Anmeldenummer: 00903531.2
(22) Anmeldetag: 18.01.2000
(51) Int. Cl.: B24D 18/00, B23K 31/02, B23K 26/00, B24D 5/12

(54) **SCHLEIF- ODER SCHNEIDWERKZEUG**
GRINDING OR CUTTING TOOL
OUTIL DE MEULAGE OU DE COUPE

(30) Priorität: 20.01.1999 DE 19902077
(43) Veröffentlichungstag der Anmeldung: 28.11.2001
(73) Patentinhaber: Dialux Diamantwerkzeuge GmbH, 91126 Schwabach (DE)
(72) Erfinder: GRÜNEIS, Hans, D-91126 Schwabach (DE)
(74) Vertreter: Schuhmann, Albrecht
(86) Internationale Anmeldenummer: DE0000147
(87) Internationale Veröffentlichungsnummer: WO00043163

(56) Entgegenhaltungen:
- EP-A- 0 703 034
- BE-A- 416 774

## Beschreibung

Die Erfindung betrifft ein Schleif- oder Schneidwerkzeug, insbesondere eine Trennscheibe, eine Bohrkrone oder ein Sägeseil mit den Merkmalen des Oberbegriffs des Anspruchs 1.

Aus der DE-A-195 20 149 ist bekannt, auf Grundkörper aus Stahl einen diamanthaltigen Schneidbelag mit einer Stärke von zwischen 0,1 und 5 mm mittels eines Laserstrahls aufzuschmelzen. Ausgangswerkstoff für den Schneidbelag ist ein pulvriges Gemisch aus Bronze und Diamantkörnern. Um eine gleichmäßige Verteilung der Diamantkörner in der Schmelze zu erreichen, hat man benetzungsfördernde Stoffe wie Titan beigemischt. Da hierdurch die Haftfestigkeit des Schneidbelags auf dem Grundkörper abgenommen hat, wurde in der Zwischenzeit vorgeschlagen, zwischen dem Schneidbelag und dem Grundkörper eine Zwischenschicht aufzuschmelzen, die keinen Anteil eines solchen benetzungsfördernden Stoffes enthält, jedoch sowohl gegenüber dem Schneidbelag, als auch gegenüber dem Grundkörper eine hohe Haftfestigkeit aufweist.

Aufgabe der vorliegenden Erfindung ist es, ein Schleif- oder Schneidwerkzeug mit einem aufgeschmolzenen Schneidbelag zu schaffen, das im Aufbau einfacher gestaltet ist.

Diese Aufgabe wird mit den Merkmalen des Anspruchs 1 gelöst. Fortbildungen und vorteilhafte Ausführungen der Erfindung sind in den weiteren Ansprüchen umfaßt.

Erfindungsgemäß ist ein Schleif- oder Schneidwerkzeug, bestehend aus einem Grundkörper und einem auf diesem mittels eines Laserstrahls aufgeschmolzenen Schneidbelag aus einem Hartstoffe enthaltenden Metall, einer Hartstoffe enthaltenden Metallverbindung oder einer Hartstoffe enthaltenden Metalllegierung, wobei ein Anteil eines bezogen auf die Hartstoffe benetzungsfördernden Stoffes enthalten ist, dadurch gekennzeichnet, daß der Grundkörper aus einem Nichteisenmetall, einer Nichteisenmetallverbindung oder einer Nichteisenmetalllegierung besteht. Vorzugsweise besteht der Grundkörper aus Kupfer oder einer kupferhaltigen Legierung, wie Bronze oder Messing. Als vorteilhaft hat sich erwiesen, wenn der Grundkörper vor dem Aufschmelzen und während des Aufschmelzens des Schneidbelags auf eine Temperatur von über 600°C erhitzt wird, da dann auch bei z.B. reinem Kupfer der Schneidbelag die für das Aufschmelzen und Anhaften an dem Grundkörper erforderliche Temperatur gehalten werden kann und nicht durch diesen selbst sofort abgeleitet wird.

Im folgenden wird die Erfindung anhand einer Zeichnung beispielhaft näher beschrieben. Dabei ist eine Schnitt durch eine Trennscheibe 1 gezeigt, bei der in eine äußere umlaufende Nut 2 eines Grundkörpers 4 der Schneidbelag 3 eingebracht ist. Dieser Schneidbelag 3 wird von drei Seiten in der Nut 2 gestützt und überragt diese.

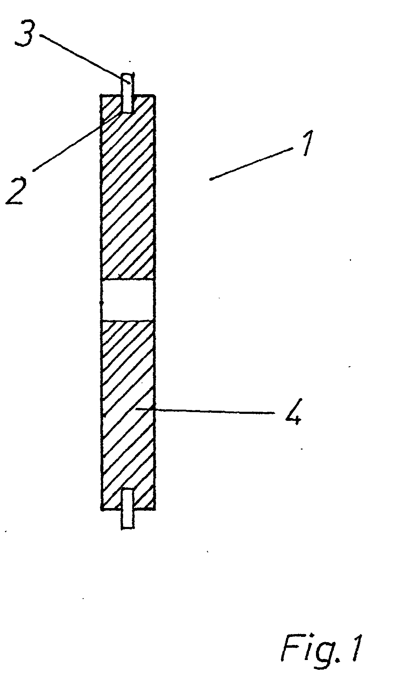

## Patentansprüche

1. Schleif- oder Schneidwerkzeug, bestehend aus einem Grundkörper und einem auf diesem mittels eines Laserstrahls aufgeschmolzenen Schneidbelag aus einem Hartstoffe enthaltenden Metall, einer Hartstoffe enthaltenden Metallverbindung oder einer Hartstoffe enthaltenden Metalllegierung, wobei ein Anteil eines bezogen auf die Hartstoffe benetzungsfördernden Stoffes enthalten ist,
**dadurch gekennzeichnet,**
**daß** der Grundkörper aus einem Nichteisenmetall, einer Nichteisenmetallverbindung oder einer Nichteisenmetalllegierung besteht.

2. Schleif- oder Schneidwerkzeug nach Anspruch 1,
**dadurch gekennzeichnet,**
**daß** der Grundkörper aus Kupfer oder einer kupferhaltigen Legierung besteht.

3. Verfahren zur Herstellung eines Schleif- oder Schneidwerkzeug nach Anspruch 2,
**dadurch gekennzeichnet,**
**daß** der Grundkörper vor dem Aufschmelzen und während des Aufschmelzens des Schneidbelags auf eine Temperatur von über 600° C erhitzt wird.

## Claims

1. A grinding or cutting tool, composed of a base body and a cutting layer melted on to the said base body by means of a laser beam and made of a metal containing hard substances, a metal compound containing hard substances or a metal alloy containing hard substances, a proportion of a substance promoting wetting with respect to the hard substances being included,
**characterised**
**in that** the base body is composed of a non-ferrous metal, a non-ferrous metal compound or a non-ferrous metal alloy.

2. A grinding or cutting tool according to Claim 1,
**characterised**
**in that** the base body is composed of copper or a copper-containing alloy.

3. A method for producing a grinding or cutting tool according to Claim 2,
**characterised**
**in that** the base body is heated to a temperature of over 600°C before the melting-on and during the melting-on of the cutting layer.

## Revendications

1. Outil de meulage ou de coupe constitué d'un corps de base et d'une garniture de coupe, appliquée sur celui-ci par fusion par faisceau laser, qui est en une matière dure contenant du métal, une matière dure contenant un composé métallique ou une matière dure contenant un alliage métallique, avec un pourcentage de matière favorisant le mouillage et appliquée sur la matière dure,
**caractérisé en ce que** le corps de base est en un métal non ferreux, un composé métallique non ferreux ou un alliage métallique non ferreux.

2. Outil de meulage ou de coupe selon la revendication 1, **caractérisé en ce que** le corps de base est en cuivre ou un alliage contenant du cuivre.

3. Procédé de fabrication d'un outil de meulage ou de coupe selon la revendication 2, **caractérisé en ce que** le corps de base est chauffé à une température de plus de 800°C avant l'application par fusion et pendant l'application par fusion de la garniture de coupe.
